# EUROPEAN PATENT APPLICATION

(11) **EP 1 717 370 A1**
(43) Date of publication of application: **02.11.2006**
(21) Application number: 06251974.9
(22) Date of filing: 07.04.2006
(51) Int. Cl.: E01C 11/16, B32B 5/26, B32B 5/28

(54) **Reinforcement membrane and methods of manufacture and use**

(30) Priority: 27.04.2005 US 116004
(71) Applicant: Saint-Gobain Technical Fabrics Canada, Ltd., Grand Island, NY 14072 (US)
(72) Inventor: Woolstencroft, Jon, St. Catherines, ON L2T 3N6 (CA); Hook, Kerry D., Holden, MA 01520 (US); Darling, James R., St Catherines, Ontario L2N 7S9 (CA)
(74) Representative: Wilson Gunn

(57) **Abstract**

A roadway reinforcement membrane (100) has a composite reinforcement layer of reinforcement fibers (106) in a matrix of polymeric material (108), wherein the reinforcement layer is an intermediate layer between a top veil (110) and a bottom veil (110), and wherein the bottom veil can be applied with a coating for adherence to a roadway course; and wherein the top veil can be applied with a coating for adherence to road surfacing material.

## Description

### FIELD OF THE INVENTION

The invention relates to reinforced asphalt-based road surfacing materials, and particularly, to reinforced membranes having superior water resistance and superior mechanical properties under heavy loads.

### BACKGROUND

U.S. Patent 6,235,136 discloses a water resistant membrane for reinforcing asphalt-based road surfacing materials. A scrim or grid of open mesh bi-axially oriented fibers provides a reinforcing layer. The reinforcing layer is covered by, and embedded in, a mastic layer having adhesive properties and water resisting properties. The mastic layer and the reinforcing layer are successively applied on a roadway surface, and heat is applied together with pressure to adhere the mastic layer to the surface. Asphalt paving material is applied onto membrane. The membrane adheres to the asphalt paving material that forms a road surface course.

U.S. Patent 5,836,715 discloses a woven structure, wherein a B-stage thermoset resin coats an open gridwork of warp strands and weft strands. A layer of hot asphalt paving material is applied to cover the woven structure, causing the B-stage thermoset resin to become fully cured to, a fully set or fully cured, thermoset stage to join the strands where they cross one another. The joined strands become immobilized by the fully cured resin to provide a rigid reinforcement structure covered by the paving material.

US 2003/0086762 A1 discloses a reinforcement sheet structure to be covered by asphalt paving, wherein a prepeg contains 30% to 85% of long reinforcing fibers fused into a sheet of thermoplastic resin. Water resistant asphalt is heated and fused to both sides of the sheet to form a road reinforcing sheet that is adapted to be laid onto a paved road and covered by a surface course of asphalt paving.

Thus, prior to the present invention, a reinforcement sheet was a woven structure coated by a B-stage thermoset resin, as in US 5,836,715, which did not provide waterproofing, or was a sheet of fibers fused into a water resistant sheet of thermoplastic resin, as in US 2003/0086762 A1, which did not provide a unified structure of a road surfacing material with a fiber reinforcing structure. Further, the B-stage material required careful handling, for having viscous and adhesive properties, as well as a tendency to degrade. The thermoplastic resin lacked both tensile strength modulus and flexure strength modulus.

### SUMMARY OF THE INVENTION

The invention is defined by the following claims.

In one embodiment, a roadway reinforcement membrane is fabricated with, a composite reinforcement layer containing reinforcement fibers in a matrix of polymeric material, a bottom veil is secured on a bottom of the composite reinforcement layer, wherein the bottom veil is adapted for adherence to a roadway course by an adherent asphalt-based cementitious material coating permeating the bottom veil, and a top veil is secured on a top of the composite reinforcement layer, wherein the top veil is adapted for adherence to an asphalt-based road surfacing material by an adherent asphalt-based cementitious material coating permeating the top veil.

According to further embodiments, a method making the reinforcement membrane and a method of reinforcing a roadway are disclosed.

Other embodiments of the invention will become apparent by way of example from the following detailed description of the preferred embodiments, taken in conjunction with the accompanying drawings.

### BRIEF DESCRIPTION OF THE DRAWINGS

Fig. 1 is an isometric view with parts broken away to disclose a reinforcement membrane.

Fig. 1 A is a fragmentary section view of a roadway and a reinforcement membrane.

Fig. 2 is a cross section of another embodiment of a reinforcement membrane.

Fig. 3 is a cross section of another embodiment of a reinforcement membrane.

Fig. 4 is a schematic view of a roadway and a reinforcement membrane.

### DETAILED DESCRIPTION

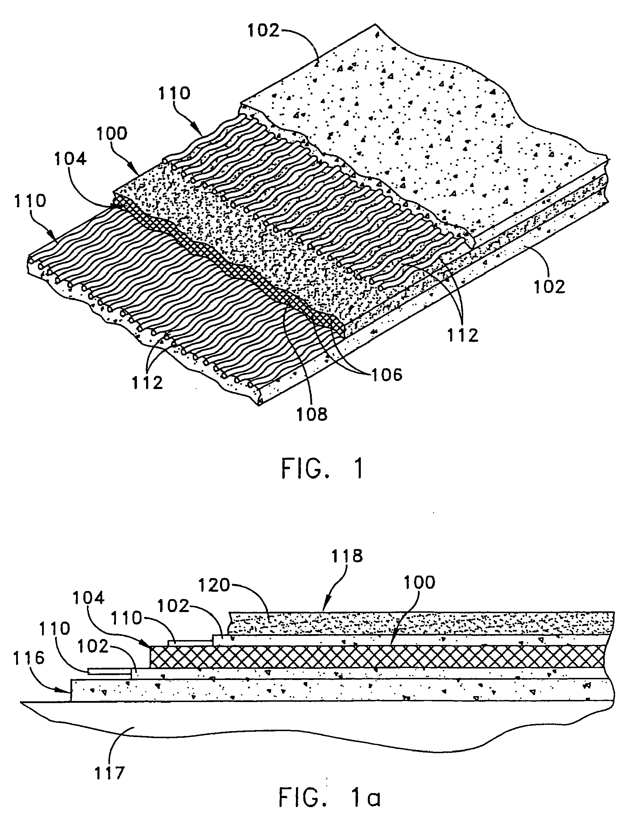

Fig. 1 discloses a reinforcement membrane 100 having a reinforcement layer 104 of reinforcement fibers 106 commingled with polymeric material 108. The reinforcement layer 104 has top and bottom surfaces, respectively, covered by one of a pair of veils 110, the veils 110 comprising elongated fibers or strands 112 as contrasted with chopped strands that are relatively short. A bottom veil 110 on a bottom surface of the reinforcement layer 104 is adapted to face toward a bottom course of a roadway. A top veil 110 on a top surface of the reinforcement layer 104 is adapted to face toward an asphalt-based road surfacing material that provides a surface course of the roadway.

The reinforcement layer 104 is made with commingled reinforcement fibers 106 and a thermoplastic matrix comprised of polymeric material 108. For example, the reinforcement fibers 106 includes but is not limited to, glass, polyester and other high strength materials having a melting temperature higher than the melting temperature of the polymeric material 108. For example, the polymeric material 108 includes, but is not limited to rovings, fibers, yarns or segments, groups and mixtures thereof, which have been melted, partially or fully, while under pressure, and re-solidified to join or bond with the reinforcement fibers 106. The reinforcement layer 104 has a rigidity range from, being at least semi-rigid, to being substantially fully rigid, by having the polymeric material 108 consolidated, by being melted and secured to the reinforcement layer 104 and each veil 110 while under pressure, followed by cooling to become stable at ambient temperature.

A suitable reinforcement layer 104 is commercially available under the brand name, TWINTEX® from Saint-Gobain Technical Fabrics Canada, Ltd. for example, the reinforcement layer 104 comprises 40% to 60% glass reinforcement fibers 106 commingled with one another and commingled with the polymeric material 108. The polymeric material 108 of the reinforcement layer 104 includes any of the polymeric materials, singly or in groups or mixtures of two or more polymeric materials, which is capable of melting at a corresponding first melting temperature and forming a bond with the reinforcement layer 104 when solidified, including but not limited to, polypropylene, polyethylene, polystyrene, and other suitable thermoplastic resins, and thermosetting resins, including but not limited to, polyester, epoxy, phenolic, melamine and silicones, and further including but not limited to, partially cured resins and B-stage resins. The reinforcement fibers 106 have a corresponding melting temperature higher than the first melting temperature. The polymeric material 108 in the consolidated reinforcement layer 104 bonds to the reinforcement fibers 106, to form a sheet or open grid having the reinforcement fibers 106 commingled in a woven or nonwoven fabric, open mesh or grid, or commingled in either random orientation or uniaxial orientation.

Each veil 110 is constructed of a layer of fibers or strands 112. According to an embodiment of the invention, the fibers or strands 112 comprise a veil material including, but not limited to, polyester, rayon, polypropylene, cotton, glass, groups and mixtures thereof, or blended fibers, wherein such fibers or strands 112 preferably have a melting point temperature higher than a lower melting point temperature of the polymeric material 108 of the reinforcement layer 104. Further the fibers or strands 112 retain their tensile strength while withstanding the temperatures at which the polymeric material 108 is melted. Further, such fibers or strands 112 retain their tensile strength when one or more hot asphalt-based road surfacing materials are applied thereto during fabrication of a roadway reinforcement membrane 100, and/or during fabrication of a roadway that is reinforced with the roadway membrane 100.

According to an embodiment of the present invention, polyester fibers or strands 112 are selected for their tensile strength, low cost and availability. Further, according to an embodiment of the invention, non-woven fibers or strands 112 are arranged in at least a single thickness to form a nonwoven veil 110. According to another embodiment of the invention, the fibers or strands 112 are commingled in a nonwoven mat that forms the veil 110. Openings through the veil 110 are provided among the fibers or strands 112. According to another embodiment of the invention, the fibers or strands 112 are interlaced to form a woven veil 110. Alternatively, the veil 110 can be a nonwoven layer, web or film of the veil material, or having perforations or other openings punched, needle-punched, cut or sliced therethrough, such that the openings through the veill 110 overly the reinforcement layer 104. The veil 110 should have a thickness range of about 0.20 to about 0.40 mm. and preferably about 0.30 to about 0.40 mm., and most preferably about 0.35 mm.

Each veil 110 is laid onto the reinforcement layer 104. At least one surface of the veil 110 is secured onto the reinforcement layer 104 by having the polymeric material 108 melted, partially or fully, while under pressure. For example, the polymeric material 108 can be heated at least to its melting point temperature, while pressure is applied to the reinforcement layer 104 and the veil 110 by a known calendar rolling apparatus. The polymeric material 108 melts and consolidates with the fibers 104 of the reinforcement layer 104, which upon cooling to ambient temperature, forms a unified reinforcement layer structure. Further, the melted polymeric material 108 at the interface of the veil 110 and the reinforcement layer 104 is forced under pressure to bond to at least one surface of the veil 110, such that, upon cooling and solidifying of the polymeric material 108, the solidified polymeric material 108 unites the reinforcement layer 104 and at least one surface of the veil 110 to form a unified structure. Alternatively, the veil 110 can be secured onto the reinforcement layer 104 by an adhesive or by stitches of a binding thread, for example, a binding thread selected from one of the fibers 112 of the veil 110 itself.

Further, for example, an adherent asphalt-based cementitious material 102, includes but is not limited to, an asphalt liquid cement and an asphalt mastic, as disclosed by U.S. Patent 6,235,136 to Kittson et al., incorporated herein by reference. According to an embodiment of the invention, the material 102, is applied and assembled to the membrane 100 in a manufacturing facility or factory. Alternatively, a suitable adherent asphalt-based cementitious material 102 includes any of the road surfacing materials, preferably a modified asphalt with sufficient adhesive or cementitious properties to adhere to a roadway surface. Accordingly, the material 102 is applied and assembled to the membrane 100 at a road surfacing construction site. The modified asphalt includes but is not limited to, styrene-butadiene-styrene modified asphalt, styrene-butadiene rubber modified asphalt, or propylene modified bitumen, any of which can be applied while hot by road surfacing equipment to cover the membrane 100 after the membrane 100 has been applied to cover a roadway surface.

According to an embodiment of the present invention, the reinforcement layer 104 and the veil 110, respectively, are laminates. The veil 110 laminate becomes embedded, at least partially embedded or fully embedded, in the adherent asphalt-based cementitious material 102. The adherent asphalt-based cementitious material 102 is applied as a coating that permeates the veil 110, and flows through the veil openings, and is spread at least partially throughout the surface of the reinforcement layer 104 laminate, thereby permeating the same with an adherent coating. The asphalt-based cementitious material 102 can have a thickness, at least, equal to the thickness of the veil 110 when the veil 110 becomes imbedded in the asphalt-based cementitious material 102. Further, the asphalt-based cementitious material 102 can have a thickness greater than the thickness of the veil 110. The asphalt-based cementitious material 102 passes through the openings among the strands or perforations of the veil 110 laminate to spread as a coating throughout the surface of the reinforcement layer 104 underlying the veil 110. According to a further embodiment of the present invention, when the previously described openings in the reinforcement layer 104 extend through the thickness thereof, the cementitious material 102 permeates such openings to form an adherent coating on the reinforcement layer 104. Alternatively, the cementitious material 102 further permeates throughout the thickness of the reinforcement layer 104. Further, the cementitious material 102 fills the perforations or openings among the fibers or strands 112 of the veil 110, and is forced to assume a desired thickness, as determined by the veil thickness. The veil 110 restrains the cementitious material 102 from excessive movement, such as, by slumping while in a fluidic or viscous state to assume an undesired thin layer, or such as, by scattering into separate puddles on the reinforcement layer 104.

Fig. 1A discloses that an adherent asphalt-based cementitious material 102 adheres the bottom veil 110 of the membrane 100 to a first or lower roadway course 116 that is being surfaced or resurfaced with an asphalt-based surface course 118. The roadway course 116 is on a supporting surface 117 of a bridge, or on the earth, for example. Advantageously, by interposing the membrane 100 as an interlayer between the lower course 116 of cement or asphalt, and an asphalt-based road surfacing material 120 that provides the surface course 118, the membrane 100 reinforces both courses 116, 118 to deter rutting in the roadway due to traffic-applied loads. Further, the membrane 100 is adhered to the two roadway courses 116, 118 by corresponding layers of the adherent asphalt-based cementitious material 102. Further, the asphalt-based cementitious material 102 can provide waterproofing of the roadway by having at least one of the layers of the asphalt-based cementitious material 102 being adhered to the reinforcement layer 104, and held in place by a corresponding veil 110.

A road is reinforced according to a method of the present invention. A first layer or bottom layer of hot adherent asphalt-based cementitious material 102 is applied by known asphalt paving machinery to a lower course 116 roadway surface, followed by laying the membrane 100 over the asphalt-based cementitious material 102. The bottom veil 110 is adapted to face toward the roadway course 116 for adherence thereto, by at least partially imbedding in the first layer of adherent asphalt-based cementitious material 102. Next, a second layer or top layer of hot adherent asphalt-based cementitious material 102 is applied to cover the membrane 100, followed by applying a hot asphalt-based road surfacing material 120 that consolidates to provided a roadway surface course 118. The hot asphalt-based road surfacing material is typically 110°C and higher, and heats at least the top layer of asphalt-based cementitious material 102 to its melting point temperature, at least partially re-melting the same. The top layer of re-melted asphalt-based cementitious material 102 and the hot road surfacing material 120 consolidate, for example, by both cooling down within a temperature range of about 300° F. and about 170° F., to form a unified structure having the top veil 110 adhered and imbedded, at least partially or fully, in the top layer of adherent asphalt-based cementitious material 102. The top layer of adherent asphalt-based cementitious material 102 and the surface course material 120 further consolidate to form a unified structure with the reinforcement layer 104 to which the asphalt-based cementitious material 102 adheres.

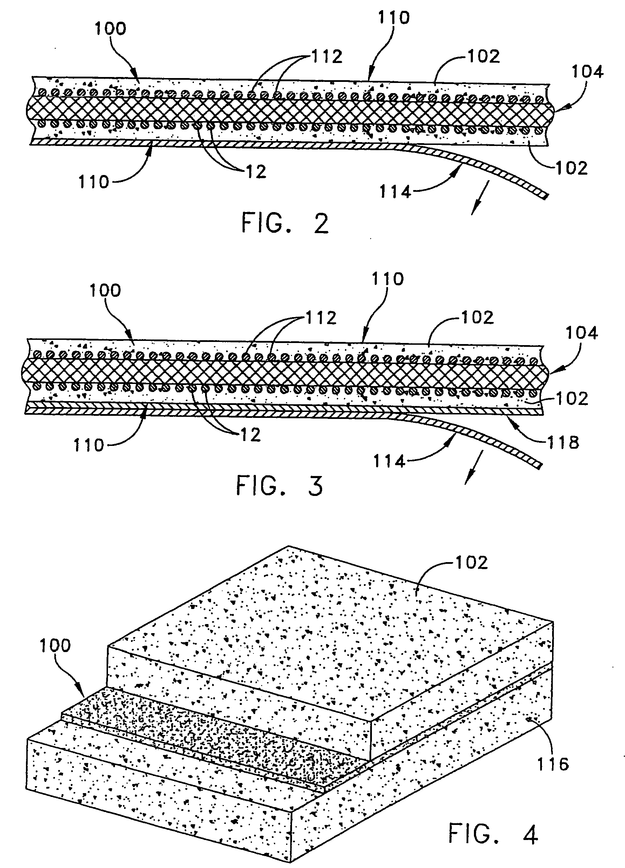

Fig. 2 discloses another embodiment of the present invention, wherein at least the first layer of the adherent asphalt-based cementitious material 102 is applied to the bottom veil 110 in a factory environment. Alternatively, in the factory environment, both bottom and top layers of such cementitious material 102 can be applied to the bottom veil 110 and the top veil 110, respectively. The membrane 100 can be made as a sheet or as a roll that is rolled up on itself. The adherent asphalt-based cementitious material 102 embeds the corresponding veil 110 at least partially, and forms a bottom layer of the membrane 100. The bottom layer is covered by a peel-off release film 114, including, but not limited to, paper, foil or polymer, to shield the asphalt-based cementitious material 102 during shipping and handling. When a top layer of cementitious material 102 is present, it can be covered by another peel-off release film 114, not shown.

According to another embodiment of the invention, shown in Fig. 3, an adhesive backing layer 116 is applied over a corresponding layer of asphalt-based cementitious material 102, followed by applying a peel-off release film 114 to cover the adhesive backing layer 116. When a top layer of cementitious material 102 is present, it can be covered by another adhesive backing layer 116, not shown, and a peel-off release film 114, not shown.

At a roadway construction site, the release film 114 is removed, followed by applying the membrane 100 with the bottom layer of asphalt-based cementitious material 102 facing a lower course of the roadway, as shown in Fig. 1. Adherence of the asphalt-based cementitious material 102 to the lower course of the roadway is augmented by the adhesive backing layer 116, when present. Thereafter, a top layer of hot adherent asphalt-based cementitious material 102, which was applied in a factory environment, or which is applied by known asphalt paving machinery to cover the membrane 100, is followed by applying a hot asphalt-based road surfacing material that forms a road surface course 120. The hot asphalt-based surface course re-heats and re-melts, at least partially or fully, the bottom layer and the top layer of asphalt-based cementitious material 102. The hot asphalt-based road surfacing material consolidates with the re-melted asphalt-based cementitious material 102, by cooling down within the consolidation temperature range to form the above described, unified structure.

This description of the exemplary embodiments is intended to be read in connection with the accompanying drawings, which are to be considered part of the entire written description. In the description, relative terms such as "lower", "upper", "horizontal", "vertical", "above", "below", "up", "down", "top" and "bottom", as well as derivatives thereof e.g., "horizontally", "downwardly", "upwardly", etc., should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

Although the invention has been described in terms of exemplary embodiments, it is not limited thereto. Rather, the appended claims should be construed broadly, to include other variants and embodiments of the invention, which may be made by those skilled in the art without departing from the scope and range of equivalents of the invention.

## Claims

1. A reinforcement membrane (100), comprising:
a composite reinforcement layer (104) containing reinforcement fibers (106) in a matrix of polymeric material (108);
a bottom veil (110) secured on a bottom of the composite reinforcement layer, wherein the bottom veil comprises a material to which an adherent asphalt-based cementitious material is applied; and
a top veil (110) of fibers secured on a top of the composite reinforcement layer, wherein the top veil comprises a material to receive an adherent asphalt-based cementitious material.

2. The reinforcement membrane according to claim 1, wherein the bottom veil and the top veil are bonded to the reinforcement layer.

3. The reinforcement membrane according to claim 1 or 2, further comprising:
a bottom layer of an adherent asphalt-based cementitious material (102) at least partially imbedding the veil and adhering to the reinforcement layer.

4. The reinforcement membrane according to claim 1 or 2, further comprising:
a bottom layer of an adherent asphalt-based cementitious material (102) at least partially imbedding the bottom veil and adhering to the reinforcement layer; and
a peel-off release film (114) covering the bottom layer.

5. The reinforcement membrane according to claim 1 or 2, further comprising:
a bottom layer of an adherent asphalt-based cementitious material (102) at least partially imbedding the bottom veil and adhering to the reinforcement layer;
an adhesive (116) covering the bottom layer; and
a peel-off release film (114) covering the adhesive.

6. A method of making a reinforcement membrane comprising:
securing top and bottom veils (110) onto respective surfaces of a reinforcement layer (104) comprising reinforcement fibers (106) and a polymeric material (108); and
consolidating the reinforcement layer by melting the polymeric material while under pressure and re-solidifying same.

7. The method of claim 6, further comprising: at least partially covering the bottom layer of adherent asphalt-based cementitious material with a peel-off release film (114).

8. The method of claim 6, further comprising:
at least partially covering the bottom layer of adherent asphalt-based cementitious material with an adhesive backing (116); and
at least partially covering the adhesive backing with a peel-off release film (114).

9. The method of any of claims 6-8, further comprising:
at least partially embedding the top veil in a top layer of an adherent asphalt-based cementitious material adapted for adherence to asphalt-based road surfacing materials.

10. The method of any of claims 6-9, further comprising:
applying a first layer of an adherent asphalt-based cementitious material (102) onto a lower course of a roadway;
applying the reinforcing membrane (100) to the first layer of adherent asphalt-based (110) cementitious material, wherein the reinforcing membrane comprises, a top veil of fibers (110) and a bottom veil of fibers respectively covering and secured onto a reinforcement layer (104) comprising reinforcement fibers (106) joined to a polymeric material (108);
at least partially embedding at least the bottom veil in the first layer of adherent asphalt-based cementitious material (102);
applying a second layer of an adherent asphalt-based cementitious material onto the reinforcing membrane;
at least partially embedding at least the top veil in the second layer of adherent asphalt-based cementitious material (102);
applying a hot asphalt-based road surfacing material to the second layer of adherent asphalt-based cementitious material; and
consolidating the hot asphalt-based road surfacing material and the second layer of adherent asphalt-based cementitious material to form a unified structure at least between the top veil and the consolidated reinforcement layer.

11. A roadway reinforcement membrane, comprising:
a pair of veils (110), each of said veils containing first fibers having a first melting point; and
a composite reinforcement layer core disposed between said pair of veils, said composite reinforcement layer core containing reinforcement fibers (106) at least partially embedded in a thermoplastic matrix (108), said thermoplastic matrix having a second melting point lower than said first melting point; and at least a first surface of each of said pair of veils is bonded to said composite reinforcement layer core by a portion of said thermoplastic matrix.

12. The roadway reinforcement membrane of claim 11, wherein at least a second surface of at least one of said pair of veils is permeated with an adherent asphalt based cementitious material (102).

13. The roadway reinforcement membrane of claim 11 or 12, wherein the adherent asphalt based cementitious material is covered by a peel-off release film (114).

14. The roadway reinforcement membrane of any of claims 11-13, wherein said composite reinforcement layer core comprises consolidated reinforcement fibers and thermoplastic fibers.

15. A reinforment membrane product comprising:
a reinforcement layer comprising consolidated commingled fibers (106); and
a pair of veil layers (110), between which the reinforcement layer is laminated, the veil layers comprising a material to which a coating can be applied for improving a bond between the veil layers and an asphalt cement.

16. The product of claim 15, wherein the reinforcement layer is a sheet, mat or open grid.

17. The product of claim 15, wherein the reinforcement layer is an open grid, and the veil layers have perforations aligned with openings in the grid.

18. The product of any of claims 15-17, wherein the consolidated commingled fibers are formed from reinforcement and one of the group consisting of polypropylene and polyester fibers.

19. The product of any of claim 15-18, wherein the veil layer comprises one of the group consisting of polyester, polypropylene and cotton.

20. A product comprising:
a reinforcement layer (104) comprising consolidated commingled fibers; and
a pair of veil layers (110), between which the reinforcement layer is laminated, the veil layers comprising a material to which a coating material can be applied for improving a bond between the veil layers and an asphalt cementitious material.
